# EUROPÄISCHE PATENTANMELDUNG

(11) **EP 1 862 769 A2**
(43) Veröffentlichungstag der Anmeldung: **05.12.2007**
(21) Anmeldenummer: 07009938.7
(22) Anmeldetag: 18.05.2007
(51) Int. Cl.: G01D 5/14, G01D 5/38

(54) **Sensormodul und Verfahren zu dessen Herstellung**

(30) Priorität: 01.06.2006 DE 102006025585
(71) Anmelder: LuK Lamellen und Kupplungsbau Beteiligungs KG, 77815 Bühl (DE)
(72) Erfinder: Hill, Wolfgang, 76135 Karlsruhe (DE)

(57) **Zusammenfassung**

Ein Sensormodul zur Lageerfassung eines Läufers einer elektrischen Maschine, hat mehreren, nebeneinander auf einem Träger angeordnete Sensorelemente, in die jeweils mindestens ein Lagesensor integriert ist. Die Sensorelemente sind in eine elektrisch isolierende, verfestigte Vergussmasse eingebettet. Der Träger ist als wärmeleitendes Element ausgebildet, das mindestens eine mit einer Wärmesenke verbindbare oder verbundene Wärmeableitstelle aufweist. Die Sensorelemente kontaktieren den Träger direkt flächig oder sind über eine Klebstoffschicht flächig mit dem Träger verbunden. Die Vergussmasse erstreckt sich durchgängig über die Sensorelemente und kontaktiert einen die Sensorelemente umgrenzenden Bereich des Trägers derart, dass die Sensorelemente durch die Vergussmasse gekapselt sind und die mindestens eine Wärmeableitstelle freiliegt.

Der Träger weist eine Positionsmarke, vorzugsweise einen Schlitz mit scharfen Referenzkanten auf, die außerhalb der Vergussmasse liegt und sowohl zur exakten Positionierung der Sensorelemente auf dem Träger als auch zur Positionierung des Sensormoduls bei der Montage in die elektrische Maschine dient.

## Beschreibung

Die Erfindung betrifft ein Sensormodul zur Lageerfassung eines Läufers einer elektrischen Maschine, mit mehreren, nebeneinander auf einem Träger angeordneten Sensorelementen, in die jeweils mindestens ein Lagesensor integriert ist, wobei die Sensorelemente in eine elektrisch isolierende, verfestigte Vergussmasse eingebettet sind. Ferner betrifft die Erfindung ein Verfahren zum Herstellen eines Sensormoduls, wobei ein Träger und Sensorelemente bereit gestellt werden, in die jeweils mindestens ein Lagesensor integriert ist, und wobei die Sensorelemente nebeneinander auf dem Träger angeordnet werden.

Ein derartiges Sensormodul ist aus der Praxis bekannt. Es weist als Träger eine Leiterplatte auf, auf der als Sensorelemente mehrere integrierte Halbleiterchips vorgesehen sind, die jeweils in einem Kunststoffgehäuse angeordnet sind. Die Halbleiterbausteine sind jeweils als Hall-Sensoren mit einem aktiven Sensorbereich ausgebildet, der Magnetfelder detektieren kann. Bei der Herstellung des Sensormoduls werden zunächst die Halbleiterchips bereitgestellt und auf einem Leadframe angeordnet. Mittels Bonddrähten werden die Halbleiterchips mit an dem Leadframe vorgesehenen Anschlusskontakten verbunden. Danach werden die Halbleiterchips in eine Spritzgussform eingesetzt, die Öffnungen für den Durchtritt der Anschlusskontakte aufweist. Dann werden Halbleiterchips jeweils mit einer Vergussmasse aus Kunststoff umspritzt. Nach Erstarren der Vergussmasse werden die so erhaltenen Halbleiterbauelemente aus der Form entnommen, um an dem Leadframe Brücken, welche die Anschlusskontakte miteinander verbinden, zu entfernen. Die fertigen Halbleiterbauelemente werden nun auf der Leiterplatte positioniert und mit dort befindlichen Leiterbahnen verlötet. An der Leiterplatte wird außerdem ein Mehrfachstecker positioniert, der mehrere elektrische Kontakte aufweist, die mit den Leiterbahnen verlötet werden. Dann wird das so erhaltene Sensormodul am Stator einer elektrischen Maschine montiert, um das Magnetfeld des Läufers der elektrischen Maschine zu detektieren. Auf den Mehrfachstecker wird ein dazu passender Gegenstecker aufgesteckt, der die elektrischen Verbindungen (Stromversorgungsleitungen, Messsignalleitungen) zwischen dem Sensormodul zu einer Ansteuereinrichtung der elektrischen Maschine herstellt. Sowohl beim Positionieren der Halbleiterchips auf dem Leadframe als auch beim Positionieren der Halbleiterbauelemente auf der Leiterplatte treten jeweils Fertigungstoleranzen auf. Auch bei der Montage des Sensormoduls an der elektrischen Maschine können Positionierungsungenauigkeiten auftreten. Die Lage der aktiven Sensorbereiche des Sensormoduls relativ zum Stator der elektrischen Maschine weist deshalb relativ große Streuungen auf. Das Sensormodul hat also nur eine entsprechend geringe Messgenauigkeit. Ein weiterer Nachteil des Sensormoduls besteht darin, dass die in den Halbleiterchips auftretende Verlustwärme wegen der geringen Wärmeleitfähigkeit der Vergussmasse nur schlecht abgeführt werden kann. Die Wärmeableitung erfolgt hauptsächlich über die Anschlusskontakte und die Leiterbahnen der Leiterplatte, die jedoch nur einen geringen Querschnitt aufweisen. Ungünstig ist außerdem, dass das Sensormodul noch vergleichsweise große Abmessungen aufweist.

Es besteht deshalb die Aufgabe, ein Sensormodul der eingangs genannten Art zu schaffen, das bei kompakten Abmessungen eine hohe Messgenauigkeit ermöglicht. Ferner besteht die Aufgabe, ein Verfahren der eingangs genannten Art anzugeben, das eine einfache und kostengünstige Herstellung des Sensormoduls ermöglicht.

Bezüglich des Sensormoduls wird die Aufgabe dadurch gelöst, dass der Träger als wärmeleitendes Element ausgebildet ist, das mindestens eine mit einer Wärmesenke verbindbare oder verbundene Wärmeableitstelle aufweist, dass die Sensorelemente den Träger direkt flächig kontaktieren oder über eine Klebstoffschicht flächig mit dem Träger verbunden sind, dass sich die Vergussmasse durchgängig über die Sensorelemente erstreckt und einen die Sensorelemente umgrenzenden Bereich des Trägers derart kontaktiert, dass die Sensorelemente gekapselt sind und die mindestens eine Wärmeableitstelle freiliegt.

Das Sensormodul ist also als Multisensorchip-Modul ausgestaltet, bei dem die einzelnen Sensorelemente flächig mit einem gemeinsamen, gut wärmeleitenden Träger verbunden sind, der an eine Wärmesenke angeschlossen oder anschließbar ist. Somit kann die in den Sensorelementen auftretende Verlustwärme gleich zu der Wärmesenke abgeleitet werden. Da die Sensorelemente bei der Fertigung des Sensormoduls ohne in ein Gehäuse eingebaut zu sein direkt auf dem Träger montiert werden können, ermöglicht das Sensormodul geringe Positionierungstoleranzen der Sensorelemente sowie kompakte Abmessungen.

Die vorstehend genannte Aufgabe wird bezüglich des Sensormoduls auch dadurch gelöst, dass die Sensorelementen den Träger direkt flächig kontaktieren oder über eine Klebstoffschicht flächig mit dem Träger verbunden sind, dass sich die Vergussmasse durchgängig über die Sensorelemente erstreckt und einen die Sensorelemente umgrenzenden Bereich des Trägers derart kontaktiert, dass die Sensorelemente gekapselt sind und dass der Träger außerhalb der Vergussmasse mindestens eine scharfe Referenzkante aufweist, die als Positionierhilfe dient.

Die Referenzkante kann dann gleichermaßen bei der Fertigung des Sensormoduls als Positionsmarke zum genauen Positionieren der Sensorelemente relativ zu dem Träger als auch bei der Montage des Sensormoduls an einer elektrischen Maschine zum lagegenauen Positionieren des Sensormoduls relativ zu der Maschine genutzt werden. Die Referenzkante ist bevorzugt an einem Schlitz angeordnet, den sie seitlich begrenzt.

Bei einer zweckmäßigen Ausgestaltung der Erfindung sind an dem Träger elektrische Kontaktelemente angeordnet, die mit den Sensorelementen elektrisch verbunden sind und mit einem Kontaktierungsbereich außerhalb der Vergussmasse angeordnet sind. Über die Kontaktelemente können die Sensorelemente mit einer elektrischen Stromversorgung verbunden und die mittels der Lagesensoren erfassten Messsignale an eine externe elektrische Schaltung, wie z.B. einer Ansteuereinrichtung für die Wicklung der elektrischen Maschine weitergeleitet werden. Selbstverständlich ist es aber auch möglich, die Messsignale drahtlos von dem Sensormodul zu der externen elektrischen Schaltung zu übertragen.

Bei einer bevorzugten Ausführungsform der Erfindung ist der Träger als metallisches Stanzteil ausgebildet. Das Stanzteil besteht bevorzugt aus einem gut wärmeleitenden Metall, wie z.B. Kupfer oder Aluminium. Durch einen Biegestanzvorgang lässt sich der Träger kostengünstig in Serienfertigung herstellen.

Vorteilhaft ist, wenn der Träger Positionsmarken, insbesondere Vorsprünge oder Kanten aufweist, relativ zu denen die Sensorelemente positioniert sind. Die Positionsmarken können bei dem Biegestanzvorgang gleich an den Träger mit angeformt werden. Bei der Herstellung des Sensormoduls werden die Sensorelemente mit exaktem Bezug zu mindestens einer Positionsmarke positioniert, wodurch sie mit großer Präzision in einer vorgegebenen Lage an dem Träger angeordnet und beispielsweise mittels Klebstoff fixiert werden können.

Bei einer vorteilhaften Ausführungsform der Erfindung weist ein Randbereich des Trägers eine Stanzkante auf, wobei die Sensorelemente jeweils auf diesem Randbereich angeordnet sind und mit einer ihrer Stirnseiten zu der Stanzkante fluchten. Die Sensorelemente können dadurch mit ihrem aktiven Sensorbereich dicht an der Oberfläche des Sensormoduls positioniert sein, so dass sie Magnetfelder noch besser detektieren können. Außerdem können die Sensorelemente bei ihrer Montage an der Stanzkante ausgerichtet werden.

Bei einer bevorzugten Ausgestaltung der Erfindung ist die mindestens eine Wärmeableitstelle als Federklemme ausgebildet, die vorzugsweise U-förmig mit elastisch aus einer Ruhelage in eine Klemmstellung voneinander weg und/oder aufeinander zu bewegbaren Schenkelteilen ausgestaltet ist. Die an den Sensorelementen auftretende Verlustwärme kann dadurch noch besser zu der Wärmesenke abgeführt werden. Gleichzeitig kann die Federklemme auch zum Fixieren des Sensormoduls an der elektrischen Maschine dienen. Die Federklemme ist vorzugsweise einstückig mit dem Träger verbunden.

Bei einer vorteilhaften Ausgestaltung der Erfindung weist der Träger zum Ausgleich von Toleranzen einer mit der mindestens einen Wärmeableitstelle verbundenen oder verbindbaren Wärmesenke eine Sollverformungsstelle auf, die zwischen der Referenzkante und der Wärmeableitstelle angeordnet ist, wobei die mindestens eine Referenzkante zwischen den Sensorelementen und der Sollverformungsstelle vorgesehen ist. Die an der elektrischen Maschine fixierte Referenzkante ist dann durch die Sollverformungsstelle gegen eventuelle Lagetoleranzen der Wärmeableitstelle entkoppelt, so dass die Lage des Sensormoduls relativ zu der elektrischen Maschine im Wesentlichen nur durch die Referenzkante(n) bestimmt wird, indem beispielsweise ein Montagewerkzeug das Sensormodul exakt durch Positionierhilfen im Träger und in der elektrischen Maschine positioniert und diese Position durch einen Fügeprozess fixiert wird.

Zweckmäßigerweise sind die Kontaktelemente als Stanzgitterteile ausgebildet, die mit ihrem einen, in der Vergussmasse angeordneten Ende über ein Halteteil an dem Träger vorzugsweise mittels Klebstoff fixiert und über Bonddrähte mit den Sensorelementen verbunden sind und mit ihrem anderen, als Kontaktfahne ausgestalteten Ende aus der Vergussmasse herausragen. Das Sensormodul ist dann noch kostengünstiger herstellbar.

Bei einer bevorzugten Ausgestaltung der Erfindung sind die Lagesensoren Magnetfeldsensoren, insbesondere Hall-Sensoren und/oder magnetoresistive Sensoren. Als Lagesensoren können aber auch Wirbelstromsensoren vorgesehen sein.

Vorteilhaft ist, wenn auf dem Träger zusätzlich zu den Lagesensoren mindestens ein weiterer Sensor angeordnet ist, insbesondere ein Temperatursensor und/oder ein Shunt. Dabei kann der weitere Sensor ebenfalls flächig wärmeleitend mit dem Träger verbunden sein.

Die vorstehend genannte Aufgabe wird bezüglich des Verfahrens dadurch gelöst, dass ein wärmeleitender Träger, der mindestens eine Wärmeableitstelle zum Verbinden mit einer Wärmesenke aufweist, und Sensorelemente bereit gestellt werden, in die jeweils mindestens ein Lagesensor integriert ist, dass die Sensorelemente nebeneinander auf dem Träger angeordnet werden, indem sie jeweils flächig gegen den Träger positioniert und/oder über eine Klebstoffschicht flächig mit dem Träger verbunden werden, und dass danach auf den Träger und die Sensorelemente eine elektrisch isolierende Vergussmasse derart aufgebracht und verfestigt wird, dass die Sensorelemente durch die Vergussmasse gekapselt sind und die mindestens eine Wärmeableitstelle freiliegt.

Die Sensorelemente werden also direkt auf dem Träger positioniert und erst danach mit der Vergussmasse umkapselt. Die Sensorelemente können dadurch mit großer Präzision beispielsweise mittels eines Montageroboters an dem Träger angeordnet werden. Mit Hilfe des Verfahrens ist es möglich, auf einfache Weise ein kostengünstiges Multisensorchip-Modul mit sehr kompakten Abmessungen herzustellen. Da die Sensorelemente derart an dem Träger positioniert werden, dass sie mit diesem flächig wärmeleitend verbunden sind, kann die in den Sensorelementen auftretende Verlustwärme über den Träger gut an die Wärmesenke abgeführt werden.

Vorteilhaft ist, wenn ein Träger bereitgestellt wird, der mindestens eine scharfe Referenzkante aufweist, und wenn die Sensorelemente relativ zu der Referenzkante auf dem Träger positioniert werden. Das nach dem Verfahren hergestellte Sensormodul weist dann bezüglich der Lage der aktiven Sensorbereiche der Sensorelemente noch geringere Toleranzen auf.

Nachfolgend ist ein Ausführungsbeispiel der Erfindung anhand der Zeichnung näher erläutert.
Es zeigen:
- Fig. 1: eine Aufsicht auf einen Träger, an dem Halbleiter-Sensorchips und Anschlusskontakten fixiert sind,
- Fig. 2: eine Ansicht auf die Vorderseite eines Sensormoduls,
- Fig. 3: eine Ansicht auf die Rückseite des Sensormoduls,

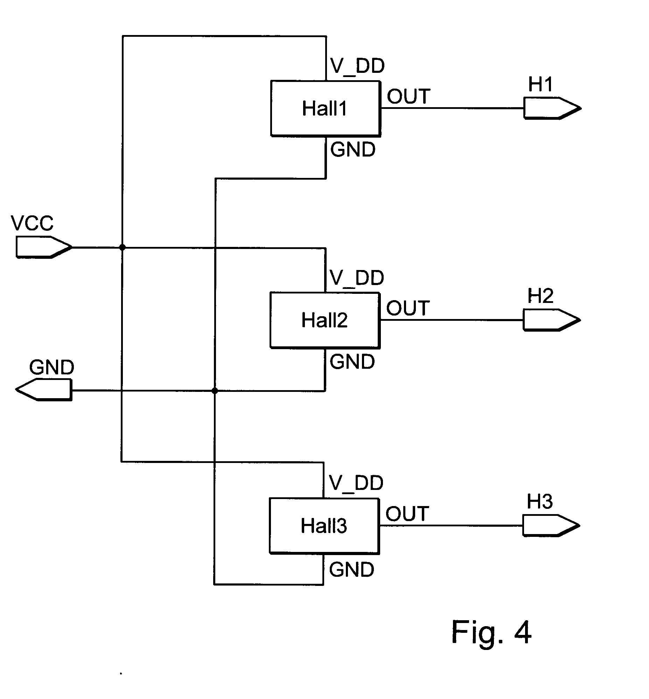

- Fig. 4: ein Schaltbild des Sensormoduls und
- Fig. 5: einen Längsschnitt durch eine elektrische Maschine.

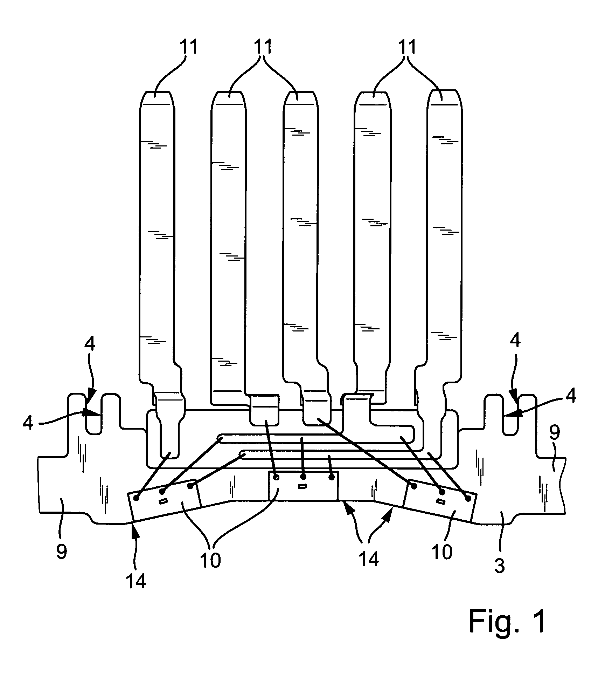

Bei einem Verfahren zum Herstellen eines Sensormoduls 1, das zur Lageerfassung eines Läufers 13 einer elektrischen Maschine 2 vorgesehen ist, wird mittels eines Biegestanz-Vorgangs aus einem Stück Blech ein wärmeleitender Träger 3 gefertigt. In Fig. 1 ist erkennbar, dass bei dem Biegestanz-Vorgang an dem Träger mehrere Referenzkanten 4 gebildet werden, die parallel zu einander verlaufen und an zungenförmigen Vorsprüngen angeordnet sind.

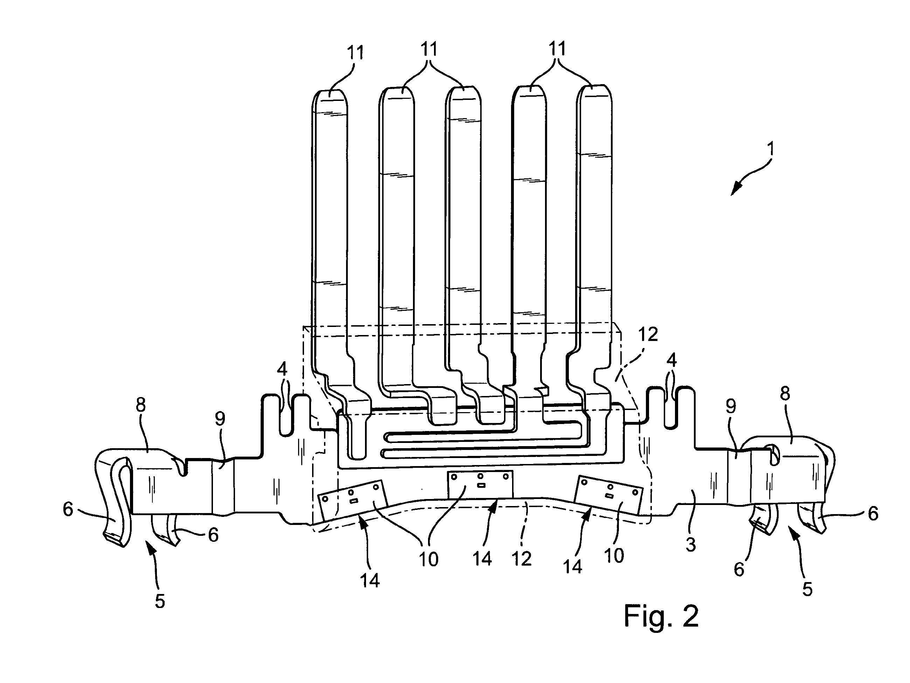

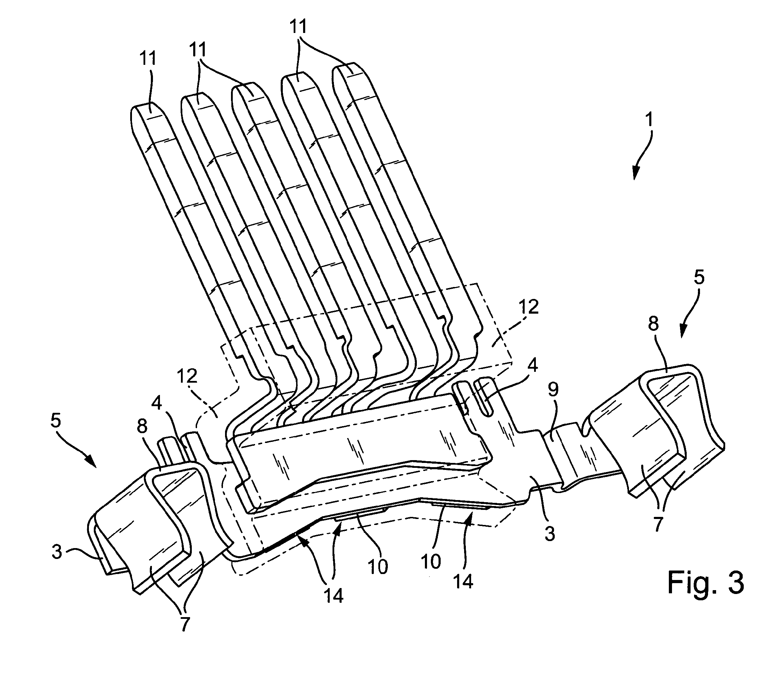

Wie in Fig. 2 und 3 erkennbar ist, werden während des Biegestanz-Vorgangs außerdem Federklemmen 5 an den Träger 3 angeformt, die Wärmeableitstellen bilden, die später klemmend mit einer Wärmesenke verbunden werden, nämlich einem metallischen Gehäuseteil 6 der elektrischen Maschine 2.

Die Federklemmen 5 sind etwa U-förmig mit jeweils zwei Schenkelteilen 7 ausgestaltet, die durch einen U-Quersteg 8 miteinander verbunden sind. Die Schenkelteile 7 haben an ihren freien Enden Einführschrägen für die zwischen ihnen einzuklemmende Wärmesenke.

Die U-Querstege 8 sind an einem ihrer Stirnenden einstückig mit einem etwa streifenförmigen Teilbereich des Trägers verbunden. Zwischen dem streifenförmigen Teilbereich und dem U-Quersteg 8 ist eine Biegestelle vorgesehen. Die Haupterstreckungsebenen der U-Querstege 8 und des streifenförmigen Teilbereichs verlaufen etwa unter einem Winkel von 90° zueinander. Die zwischen dem streifenförmigen Teilbereich und dem U-Quersteg 8 angeordnete Biegelinie verläuft etwa parallel zur Längserstreckung des streifenförmigen Teilbereichs. Die Schenkelteile 7 sind mit ihren freien Enden aus einer Ruhelage voneinander weg und aufeinander zu bewegbar.

Zum Ausgleich von Toleranzen der mit den Federklemmen 5 verbindbaren Wärmesenke weist der Träger 3 zwischen den Referenzkanten 4 und den Federklemmen 5 jeweils eine Sollverformungsstelle 9 auf, die als Sicke ausgestaltet ist, welche in den Träger 3 eingestanzt oder eingeprägt ist. Die Sollverformungsstellen 9 erstrecken sich jeweils etwa parallel zu den Referenzkanten 4.

An dem Träger 3 werden mittels eines in der Zeichnung nicht näher dargestellten Montageroboters mehrere als Halbleiterchips ausgebildete Sensorelemente10 nebeneinander positioniert. Die Sensorelemente 10 sind als Hall-Sensoren mit einem aktiven Sensorbereich ausgestaltet, der für Magnetfelder empfindlich ist. Die Sensorelemente 10 werden an oder dicht benachbart zu einer Stanzkante 14 des Trägers 3 angeordnet.

Während des Positionierens der Sensorelemente 10 wird der Träger 3 mit den Referenzkanten gegen in der Zeichnung nicht näher dargestellte Widerlager positioniert, um den Träger 3 in eine genau vorgegebene Lage zu bringen.

Die Sensorelemente 10 werden in gleichen Abständen zueinander auf einer gedachten Kreislinie auf dem Träger 3 angeordnet. Dabei werden sie jeweils mit einer ihrer Flachseiten über eine Klebstoffschicht flächig wärmeleitend mit dem Träger 3 verbunden.

Aus einem elektrischen Kontaktwerkstoff, wie z.B. Messing, wird ein Stanzgitter gefertigt, das mehrere Kontaktelemente 11 aufweist. Diese werden an dem Träger 3 positioniert und mittels Klebstoff fixiert. In Fig. 2 und 3 ist erkennbar, dass das Stanzgitter einen Absatz aufweist und dass die einzelnen Kontaktelemente 11 jeweils durchgängig über die Kanten des Absatzes verlaufen. Die in Montagestellung vom Träger 3 entfernten freien Enden der Kontaktelemente 11 verlaufen etwa parallel zueinander. Die den Sensorelementen 10 zugewandten Enden der Kontaktelemente 11 werden mit Hilfe von Bonddrähten elektrisch mit den Kontaktelementen 11 verbunden.

Danach wird die so erhaltene Sensoranordnung in eine in der Zeichnung nicht näher dargestellte Spritzgießform eingesetzt, die Öffnungen für den Durchtritt des Trägers 3 und der Kontaktelemente 11 aufweist. In der Spritzgießform wird die Sensoranordnung unter Einwirkung von Wärme und Druck derart mit einer elektrisch isolierenden Vergussmasse 12 umspritzt, dass die Sensorelemente 10 durch die Vergussmasse 12, den Träger 3 und die Kontaktelemente 11 gekapselt sind und die Referenzkanten 4, die Federklemmen 5 und die freien Enden der Kontaktelemente 11 freiliegen.

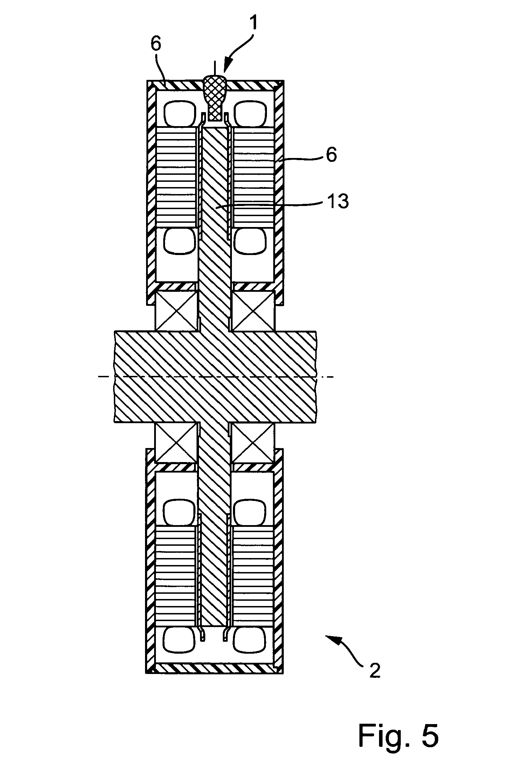

Nachdem die Vergussmasse 12 erstarrt ist, wird das fertige Sensormodul aus der Spritzgießform entnommen und derart an der elektrischen Maschine 2 positioniert, dass die Federklemmen 5 klemmend an einem Wandungsbereich des Gehäuseteils 6 zur Anlage kommen und die Referenzkanten an dazu passenden Referenzstellen des Gehäuseteils 6 angreifen, um den Träger 3 in einer vorgegebenen Lage an dem Gehäuseteil 6 zu positionieren. In Fig. 5 ist erkennbar, dass die Sensorelemente 10 in Montagestellung radial außerhalb des scheibenförmigen Läufers 13 der elektrischen Maschine angeordnet sind, um das Magnetfeld der permanentmagnetischen Magnetpole des Läufers 13 zu detektieren.

### Bezugszeichenliste

- 1: Sensormodul
- 2: Maschine
- 3: Träger
- 4: Referenzkante
- 5: Federklemme
- 6: Gehäuseteil
- 7: Schenkelteil
- 8: U-Quersteg
- 9: Sollverformungsstelle
- 10: Sensorelement
- 11: Kontaktelement
- 12: Vergussmasse
- 13: Läufer
- 14: Stanzkante

## Patentansprüche

1. Sensormodul (1) zur Lageerfassung eines Läufers (13) einer elektrischen Maschine (2), mit mehreren, nebeneinander auf einem Träger (3) angeordneten Sensorelementen (10), in die jeweils mindestens ein Lagesensor integriert ist, wobei die Sensorelemente (10) in eine elektrisch isolierende, verfestigte Vergussmasse (12) eingebettet sind, **dadurch gekennzeichnet, dass** der Träger (3) als wärmeleitendes Element ausgebildet ist, das mindestens eine mit einer Wärmesenke verbindbare oder verbundene Wärmeableitstelle aufweist, dass die Sensorelementen (10) den Träger (3) direkt flächig kontaktieren oder über eine Klebstoffschicht flächig mit dem Träger (3) verbunden sind, dass sich die Vergussmasse (12) durchgängig über die Sensorelemente (10) erstreckt und einen die Sensorelemente (10) umgrenzenden Bereich des Trägers (3) derart kontaktiert, dass die Sensorelemente (10) gekapselt sind und die mindestens eine Wärmeableitstelle freiliegt.

2. Sensormodul (1) zur Lageerfassung eines Läufers (13) einer elektrischen Maschine (2), insbesondere nach Anspruch 1, mit mehreren, nebeneinander auf einem Träger (3) angeordneten Sensorelementen (10), in die jeweils mindestens ein Lagesensor integriert ist, wobei die Sensorelemente (10) in eine elektrisch isolierende, verfestigte Vergussmasse (12) eingebettet sind, **dadurch gekennzeichnet, dass** die Sensorelementen (10) den Träger (3) direkt flächig kontaktieren oder über eine Klebstoffschicht flächig mit dem Träger (3) verbunden sind, dass sich die Vergussmasse (12) durchgängig über die Sensorelemente (10) erstreckt und einen die Sensorelemente (10) umgrenzenden Bereich des Trägers (3) derart kontaktiert, dass die Sensorelemente (10) gekapselt sind und dass der Träger (3) außerhalb der Vergussmasse (12) mindestens eine scharfe Referenzkante (4) aufweist, die als Positionierhilfe dient.

3. Sensormodul (1) nach Anspruch 1 oder 2, **dadurch gekennzeichnet, dass** an dem Träger (3) elektrische Kontaktelemente (11) angeordnet sind, die mit den Sensorelementen (10) elektrisch verbunden sind und mit einem Kontaktierungsbereich außerhalb der Vergussmasse (12) angeordnet sind.

4. Sensormodul (1) nach einem der Ansprüche 1 bis 3, **dadurch gekennzeichnet, dass** der Träger (3) als metallisches Stanzteil ausgebildet ist.

5. Sensormodul (1) nach einem der Ansprüche 1 bis 4, **dadurch gekennzeichnet, dass** der Träger (3) Positionsmarken, insbesondere Vorsprünge und/oder Kanten aufweist, relativ zu denen die Sensorelemente (10) positioniert sind.

6. Sensormodul (1) nach einem der Ansprüche 1 bis 5, **dadurch gekennzeichnet, dass** ein Randbereich des Trägers (3) eine Stanzkante aufweist, und dass die Sensorelemente (10) jeweils auf diesem Randbereich angeordnet sind und mit einer ihrer Stirnseiten zu der Stanzkante fluchten.

7. Sensormodul (1) nach einem der Ansprüche 1 bis 6, **dadurch gekennzeichnet, dass** die mindestens eine Wärmeableitstelle als Federklemme (5) ausgebildet ist, die vorzugsweise U-förmig mit elastisch aus einer Ruhelage in eine Klemmstellung voneinander weg und/oder aufeinander zu bewegbaren Schenkelteilen (7) ausgestaltet ist.

8. Sensormodul nach einem der Ansprüche 1 bis 7, **dadurch gekennzeichnet, dass** der Träger (3) zum Ausgleich von Toleranzen einer mit der mindestens einen Wärmeableitstelle verbundenen oder verbindbaren Wärmesenke wenigsten eine Sollverformungsstelle (9) aufweist, die zwischen der Referenzkante (4) und der Wärmeableitstelle angeordnet ist, und dass die mindestens eine Referenzkante (4) zwischen den Sensorelementen (10) und der Sollverformungsstelle (9) vorgesehen ist.

9. Sensormodul (1) nach einem der Ansprüche 1 bis 8, **dadurch gekennzeichnet, dass** die Kontaktelemente (11) als Stanzgitterteile ausgebildet sind, die mit ihrem einen, in der Vergussmasse (12) angeordneten Ende über ein Halteteil an dem Träger (12) vorzugsweise mittels Klebstoff fixiert und über Bonddrähte mit den Sensorelementen (10) verbunden sind und mit ihrem anderen, als Kontaktfahne ausgestalteten Ende aus der Vergussmasse (12) herausragen.

10. Sensormodul (1) nach einem der Ansprüche 1 bis 9, **dadurch gekennzeichnet, dass** die Lagesensoren Magnetfeldsensoren sind, insbesondere Hall-Sensoren und/oder magnetoresistive Sensoren.

11. Sensormodul (1) nach einem der Ansprüche 1 bis 10, **dadurch gekennzeichnet, dass** die Sensorelemente (10) Wirbelstromsensoren sind.

12. Sensormodul (1) nach einem der Ansprüche 1 bis 11, **dadurch gekennzeichnet, dass** auf dem Träger (3) zusätzlich zu den Lagesensoren mindestens ein weiterer Sensor angeordnet ist, insbesondere ein Temperatursensor und/oder ein Shunt.

13. Verfahren zum Herstellen eines Sensormoduls (1) nach einem der Ansprüche 1 bis 12, wobei ein wärmeleitender Träger (3), der mindestens eine Wärmeableitstelle zum Verbinden mit einer Wärmesenke aufweist, und Sensorelemente (10) bereit gestellt werden, in die jeweils mindestens ein Lagesensor integriert ist, wobei die Sensorelemente (10) nebeneinander auf dem Träger (3) angeordnet werden, indem sie jeweils flächig gegen den Träger (3) positioniert und/oder über eine Klebstoffschicht flächig mit dem Träger (3) verbunden werden, und wobei danach auf den Träger (3) und die Sensorelemente (10) eine elektrisch isolierende Vergussmasse (12) derart aufgebracht und verfestigt wird, dass die Sensorelemente (10) durch die Vergussmasse (12) gekapselt sind und die mindestens eine Wärmeableitstelle freiliegt.

14. Verfahren nach Anspruch 13, **dadurch gekennzeichnet, dass** vor dem Aufbringen der Vergussmasse (12) an dem Träger (3) elektrische Kontaktelemente (11) angeordnet und über Bonddrähte mit den Sensorelementen (10) elektrisch verbunden werden, und dass die Vergussmasse (12) derart aufgebracht und verfestigt wird, dass die Bonddrähte durch die Vergussmasse (12) gekapselt sind und Kontaktierungsbereiche der Kontaktelemente (11) außerhalb der Vergussmasse (12) angeordnet sind.

15. Verfahren nach Anspruch 13 oder 14, **dadurch gekennzeichnet, dass** ein Träger (3) bereitgestellt wird, der mindestens eine scharfe Referenzkante (4) aufweist, und dass die Sensorelemente (10) relativ zu der Referenzkante (4) auf dem Träger (3) positioniert werden.
